# EUROPÄISCHE PATENTSCHRIFT

(11) **EP 1 772 418 B1**
(45) Veröffentlichungstag und Bekanntmachung des Hinweises auf die Patenterteilung: **02.02.2011**
(21) Anmeldenummer: 06020156.3
(22) Anmeldetag: 26.09.2006
(51) Int. Cl.: B66F 7/08, B23Q 11/00, B23Q 16/00, B23Q 7/00

(54) **Hubvorrichtung mit einem geführten Hubtisch**
Lifting device with a guided lifting table
Dispositif de levage avec une table élévatrice guidée

(30) Priorität: 06.10.2005 DE 102005048174
(43) Veröffentlichungstag der Anmeldung: 11.04.2007
(73) Patentinhaber: Schulte, Reinhold, 33106 Paderborn (DE)
(72) Erfinder: Schulte, Reinhold, 33106 Paderborn (DE)
(74) Vertreter: Rehberg Hüppe + Partner

(56) Entgegenhaltungen:
- DE-U1- 29 621 375
- US-A- 3 104 593
- US-A- 4 901 980

## Beschreibung

Die Erfindung betrifft eine Hubvorrichtung mit einem geführten Hubtisch und einem den Hubtisch anhebenden und absenkenden Huborgan.

Hubvorrichtungen der hier beschriebenen Art werden beispielsweise im Maschinenbau als anhebbare Unterlage für die Aufnahme von Werkstücken bei der Bearbeitung eingesetzt. In Betracht kommen vor allem Anlagen der Lebensmittel- oder der Verpackungsindustrie. Auf die Art des Einsatzes soll es hier nicht im einzelnen ankommen. In jedem Falle soll es sich um eine Hubvorrichtung handeln, die in der oberen Endstellung eine größere Kraft zum Abstützen des Hubtisches aufbringen kann, als sie während des Hubvorganges benötigt. Die Erfindung zielt also auf Einsatzfälle, bei denen ein Hubtisch zunächst angehoben werden kann und in der oberen Endstellung verriegelt wird, so daß hier relativ große Kräfte von einem Oberwerkzeug oder dergleichen aufgenommen werden können.

US 4,901,980 offenbart eine Hebebühne für ein Kraftfahrzeug mit scherenartig mittig gelenkig miteinander verbundenen Tragbalken, wobei ein Tragbalken in einem Endbereich gelenkig mit einer Basis verbunden ist, während der andere Endbereich translatorisch verschieblich in der Hebebühne geführt ist. Der andere Tragbalken ist in einem Endbereich verschieblich in der Basis geführt, während der gegenüberliegende Endbereich verschwenkbar an der Hebebühne angelenkt ist. Mit der Hubbewegung der Hebebühne werden die Tragbalken scherenartig auseinander- oder zusammengeschwenkt. Zum Bewirken einer derartigen Hubbewegung ist ein hydraulischer Stellzylinder in einem Endbereich an der Basis angelenkt. Ein Stößel des hydraulischen Stellzylinders wirkt im Bereich eines Knies auf einen starren Kniehebel ein, dessen Endbereich einerseits mit dem Gelenk der scherenartigen Tragbalken gekoppelt ist, während der andere Endbereich des Kniehebels an der Hebebühne angelenkt ist.

Weiterer Stand der Technik ist aus DE 296 21 375 U1 sowie US 3,104,593 bekannt.

Der Erfindung liegt die Aufgabe zugrunde, eine Hubvorrichtung dieser Art so auszuführen, daß sie eine rasche Hubgeschwindigkeit und hohe Haltekräfte in der oberen Endposition ermöglicht und mit Hilfe von verhältnismäßig wenigen Teilen kostengünstig und dauerhaft hergestellt werden kann.

Zur Lösung dieser Aufgabe ist die erfindungsgemäße Hubvorrichtung dadurch gekennzeichnet,
daß zwischen dem Hubtisch und einer Basis ein beidhändig schwenkbar gelagertes Gelenk aus zwei schwenkbar verbundenen Lenkern angeordnet ist, das durch Ausfahren des Huborgans in die Strecklage gezogen wird,
daß das Huborgan mit einem Ende schwenkbar und koaxial zum Gelenk an der Basis gelagert ist,
daß das andere Ende des Huborgans in einer Achse am tischseitigen Lenker des Gelenks schwenkbar gelagert ist, die exzentrisch zu der tischseitigen Achse des Gelenks angeordnet ist,
daß das Gelenk in der Strecklage der Lenker eine Anschlageinrichtung aufweist,
und daß die exzentrische Achse derart angeordnet ist, daß sie in der oberen Endstellung die Lenker des Gelenks gegen die Anschlageinrichtung vorspannt.

Dadurch, daß das Gelenk in der gestreckten Lage gegen die Anschlageinrichtung vorgespannt wird, kann es eine stabile Stütze für den Hubtisch bilden, die erheblich höherer Kräfte aufnehmen kann als das Huborgan. Das Huborgan wird in der oberen Endstellung dafür benötigt, das Gelenk in der durch die Anschlageinrichtung bestimmten Strecklage zu halten, muß dagegen nicht die volle Belastung des Hubtisches aufnehmen. Der Hubtisch kann somit mit relativ hoher Geschwindigkeit angehoben werden, ohne daß dabei sehr hohe Kräfte aufgewendet werden müssen, während die Abstützungen in der oberen Endstellung durch das gestreckte Gelenk übernommen wird.

Das Huborgan wird vorzugsweise durch einen pneumatischen oder hydraulischen Zylinder gebildet. In Betracht kommen jedoch auch andere Linearantriebe, beispielsweise ein Spindelantrieb..

Zu der in der vorliegenden Anmeldung und insbesondere den Ansprüchen verwendeten Terminologie ist anzumerken, daß der Hubtisch nicht einem üblichen Tisch angenähert werden muß und insbesondere nicht zwangsläufig eine Tischplatte aufweist. In Betracht kommt jede Art von Halterung oder Rahmen, die einen Gegenstand anheben bzw. abstützen kann.

Unter einem Gelenk soll hier ein Gebilde verstanden werden, das aus zwei gelenkig verbundenen Lenkern besteht, die an den äußeren Enden des jeweils äußeren Lenkers gelenkig gelagert sind.

Die exzentrisch am tischseitigen Lenker angeordnete Achse befindet sich in einer Position, in der bei Betätigung des Huborgans der tischseitige Lenker in Richtung Strecklage geschwenkt oder zumindest vorgespannt wird. Andererseits ist die Position der exzentrischen Achse so gewählt, daß sie in der zusammengeklappten unteren Stellung des Gelenks im wesentlichen in senkrechter Richtung mit der oberen Achse des tischseitigen Lenkers fluchtet.

Beim Beginn des Hubvorganges übt das Huborgan daher eine Hubkraft aus, deren Kraftvektor sich durch die exzentrische Achse und die tischseitige Achse des tischseitigen Lenkers erstreckt. Der Hubvorgang kann daher von Anfang an rasch und ohne unnötige Kraftumlenkung eingeleitet werden.

Im folgenden werden bevorzugte Ausführungsbeispiele der Erfindung anhand der beigefügten Zeichnung näher erläutert.
- Figur 1: ist eine Seitenansicht einer erfindungsgemäßen. Hubvorrichtung bei angehobenem Hubtisch;
- Figur 2: zeigt die Hubvorrichtung in entsprechender Darstellung, jedoch mit abgesenktem Hubtisch;
- Figur 3: ist eine teilweise aufgeschnittene Ansicht von links in Figur 1.

Von einer unteren, rahmenförmigen Basis 10, die einen im wesentlichen rechteckigen Umriß aufweist, gehen an den vier Ecken senkrechte Führungsstangen 12,14,16 aus.

Zwischen zwei an der unteren Basis 10 angebrachten, senkrecht aufragenden Lagerplatten 18,20, die mit Hilfe von Schrauben 22 befestigt sind, verläuft eine Achse 24, in der einerseits ein aus zwei gelenkig verbundenen Lenkern 26,28 gebildetes Gelenk und andererseits ein Zylinder 30 gelagert ist, der als Huborgan der erfindungsgemäßen Hubvorrichtung dient. Das Gelenk 26,28 einerseits und der Zylinder 30 andererseits sind unabhängig voneinander in der Achse 24 schwenkbar gelagert. Eine nach oben austretende Kolbenstange des Zylinders 30 ist mit 32 bezeichnet. Der Zylinder ist vorzugsweise ein Pneumatikzylinder, da er zwar eine relativ rasche Hubbewegung ermöglichen soll, während andererseits hohe Haltekräfte nicht benötigt werden.

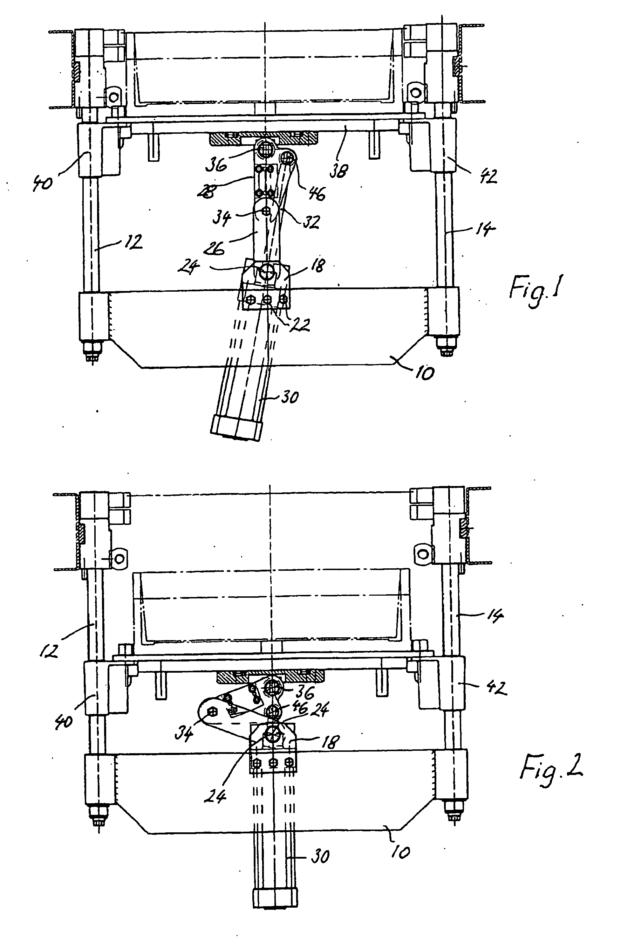

Die beiden Lenker 26,28 des Gelenks sind untereinander durch eine Achse 34 schwenkbar verbunden. Der obere Lenker 28 ist an seinem oberen Ende in einer Achse 36 schwenkbar an einem Hubtisch 38 angebracht. Dieser Hubtisch 38 weist Führungshülsen 40,42,44 auf, die auf den Führungsstangen 12,14,16 aufwärts und abwärts verschiebbar geführt sind. Der aufwärts und abwärts verfahrbare Hubtisch 38 ist in Figur 1 in seiner angehobenen und in Figur 2 in seiner abgesenkten Stellung gezeigt.

Soweit im vorliegenden Zusammenhang Begriffe wie oben oder unten verwendet werden, beziehen sie sich auf die Darstellung in der Zeichnung, in der der Hubtisch 38 von unten nach oben angehoben wird. Die Anwendung der Erfindung ist jedoch auf diese Bewegungsrichtung nicht beschränkt. Die Hubbewegung kann auch in waagerechter Richtung oder in jeder beliebigen schrägen Richtung erfolgen.

Wie erwähnt, ist der Zylinder 30, der insbesondere ein Pneumatikyzlinder ist, aber auch ein Hydraulikzylinder sein kann, in der Achse 24 schwenkbar gelagert. Figur 1 zeigt den Zylinder 30 in einer geneigten Stellung. Die Kolbenstange 32 ist mit einer Achse 46 verbunden, die sich auf dem oberen Lenker 28 in der Nähe der oberen Achse 36 dieses Lenkers in einer in Figur 1 nach rechts versetzten Position befindet. Die Achse 46 liegt also insbesondere nicht auf der Linie zwischen den beiden Achsen 34 und 36 des oberen Lenkers 28. Die Position der Achse 46 ist so gewählt, daß in der abgesenkten Stellung des Hubtisches 38, die in Figur 2 gezeigt ist, sie in der Achslinie des senkrecht stehenden Zylinders 30 liegt. Die ausfahrende Kolbenstange 32 kann daher den Hubtisch aus der unteren Position wirksam anheben.

Die exzentrische Anordnung der Achse 46, an der die Kolbenstange 32 an dem oberen Lenker 28 befestigt ist, dient dazu, den oberen Lenker 28 und damit das gesamte Gelenk 26,28 in die senkrechte Strecklage zu bewegen und in der Strecklage zu halten. Durch die Kraft des Zylinders 30 wird der obere Lenker 28 tendenziell in Gegenuhrzeigerrichtung um die Achse 36 geschwenkt.

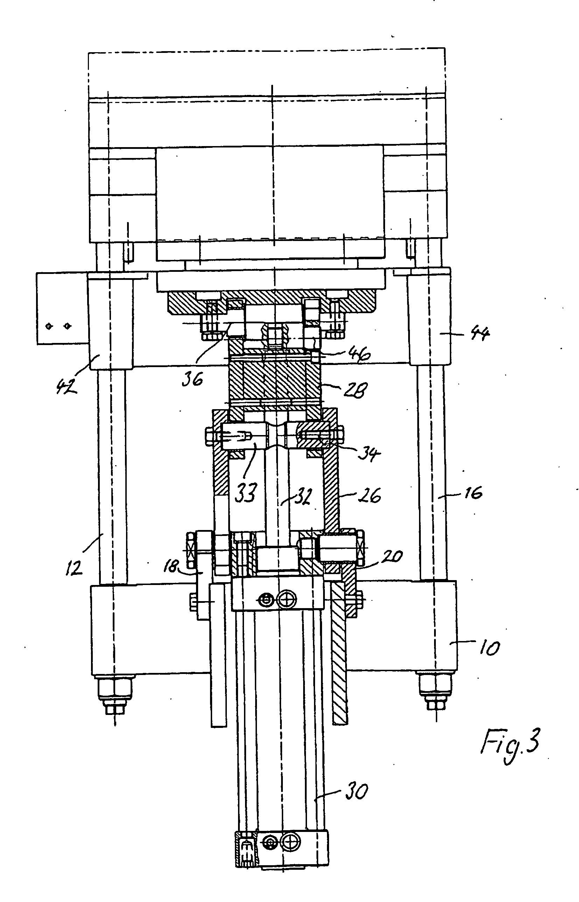

Damit das Gelenk 26,28 nicht über die Strecklage hinaus geklappt wird, ist ein Anschlag vorgesehen, der sich im Bereich der unteren oder oberen Achse 24,36 oder auch im Bereich der mittleren Achse 34 des Gelenks befinden kann. Bei der dargestellten Ausführungsform wird ein Anschlag unter Mitwirkung der Kolbenstange 32 gebildet, die sich gegen die ausgekehlte Umfangsfläche eines Verbindungsbolzens 33 legt, der in Fig. 3 gezeigt ist. Dieser Verbindungsbolzen 33 liegt in der Achse 34 zwischen den beiden Lenkern 26 und 28. In der in Figur 1 gezeigten Strecklage drückt der Zylinder 30 das Gelenk gegen diesen Anschlag, in der das Gelenk weiterhin durch die Kraft des Zylinders 30 gehalten wird. In der Strecklage kann das Gelenk hohe Kräfte aufnehmen, die in jedem Fall höher sein können als die von dem Zylinder 30 aufgebrachte maximale Kraft.

Die erfindungsgemäße Hubvorrichtung ist also für Einsatzfälle geeignet, bei denen zunächst ein Hubvorgang durchgeführt wird, für den nur relativ geringe Hubkräfte benötigt werden, während anschließend eine hohe Haltekraft zur Verfügung steht, etwa, weil der Hubtisch das Unterwerkzeug einer Stanz- oder Preßvorrichtung bildet. Auf dem Hubtisch ist eine strichpunktierte, nicht bezeichnete Verpackungseinheit, etwa ein Unterkasten eines Verpackungskartons strichpunktiert angedeutet.

Das Gelenk, das durch die Lenker 26,28 gebildet wird, wird erfindungsgemäß nicht zum Anheben des Hubtisches 38, etwa nach Art eines Kurbeltriebes genutzt, sondern lediglich zum Abstützen in der Strecklage. In die Strecklage wird das Gelenk durch die Kolbenstange 32 des Zylinders 30 mitgenommen.

Anstelle des Zylinders kann grundsätzlich auch ein anderer Linearantrieb verwendet werden, beispielsweise ein Spindelantrieb. Ein Pneumatikzylinder stellt jedoch ein kostengünstiges und zweckmäßiges Antriebselement dar, zumal in den meisten Betrieben ohnehin ein Druckluftnetz zur Verfügung steht.

## Patentansprüche

1. Hubvorrichtung mit einem geführten Hubtisch und einem den Hubtisch (38) anhebenden und absenkenden Huborgan (30, 32), wobei zwischen dem Hubtisch (38) und einer Basis (10) ein beidendig schwenkbar gelagertes Gelenk (26, 28) aus zwei schwenkbar verbundenen Lenkern (26, 28) angeordnet ist, das durch Ausfahren des Huborgans (30, 32) in die Strecklage gezogen wird,
das Huborgan (30, 32) mit einem Ende schwenkbar und koaxial zum Gelenk (26, 28) an der Basis (10) gelagert ist,
das andere Ende des Huborgans in einer Achse (46) am tischseitigen Lenker (28) schwenkbar gelagert ist, die exzentrisch zu der tischseitigen Achse (36) des Gelenks angeordnet ist, **dadurch gekennzeichnet, dass**
das Gelenk (26, 28) in der Strecklage der Lenker (26, 28) eine Anschlageinrichtung aufweist
und die exzentrische Achse (46) derart angeordnet ist, dass sie in der oberen Endstellung die Lenker (26, 28) des Gelenks (26, 28) gegen die Anschlageinrichtung vorspannt.

2. Hubvorrichtung nach Anspruch 1, **dadurch gekennzeichnet, daß** das Huborgan ein pneumatischer oder hydraulischer Zylinder (30,32) ist.

3. Hubvorrichtung nach Anspruch 1, **dadurch gekennzeichnet, daß** das Huborgan ein Spindelantrieb ist.

4. Hubvorrichtung nach Anspruch 2, **dadurch gekennzeichnet, daß** der Zylinder (30) an der Basis (10) in der Achse (24) gelagert ist und daß die Kolbenstange (32) mit der exzentrischen Achse (46) auf dem oberen Lenker (28) des Gelenks gelagert ist.

5. Hubvorrichtung nach Anspruch 1, **dadurch gekennzeichnet, daß** die exzentrische Achse (46) auf dem oberen Lenker (28), in der das Huborgan (30,32) am oberen Lenker (28) gelagert ist, seitlich gegenüber der Verbindungslinie der beiden Achsen des Lenkers (28) versetzt ist, derart, daß die Kraft des Huborgans (30,32) den oberen Lenker in Richtung Strecklage des Gelenks vorspannt.

## Claims

1. Lifting device with a guided lift table and a lifting means (30, 32) for lifting and lowering the lift table (38), wherein a link or joint (26, 28) (in the following "joint") is pivotably linked at both ends and built with two pivotably linked arms (26, 28) and located between the lift table (38) and a base (10), wherein the link or joint (26, 28) is pulled into an extended or straightened position by extending the lifting means (30, 32),
wherein one end of the lifting means (30, 32) is pivotably linked with the base (10) with an orientation of the lifting means coaxial to the link or joint (26, 28),
the other end of the lifting means is pivotably linked with an axle (46) at the arm (28) closer to the lift table, wherein the axle (46) is eccentrically to the axle (36) of the joint closer to the lift table,
**characterised by**
the link or joint (26, 28) in the extended or straightened position of the arms (26, 28) comprising an abutting unit or stop unit and
the eccentric axle (46) being located such that the eccentric axle (46) in the upper end position biasing the arms (26, 28) of link or joint (26, 28) towards the abutting unit or stop unit.

2. Lifting device of claim 1, wherein the lifting means is a pneumatic or hydraulic cylinder (30, 32).

3. Lifting device of claim 1, wherein the lifting means is a spindle drive.

4. Lifting device of claim 2, wherein the cylinder (30) is linked at the base (10) in or at the axle (24) and a piston rod (32) with the eccentric axle (46) is linked at or on the upper arm (28) of the joint.

5. Lifting device of claim 1, wherein the eccentric axle (46) on the upper arm (28) in which the lifting means (30, 32) is linked with or at the upper arm (26) is laterally offset with respect to a connecting line between the two axles of the arms (28) such that the force of the lifting means (30, 32) biases the upper arm towards the extended or straightened position of the link or joint.

## Revendications

1. Dispositif de levage avec une plate-forme mobile guidée et un organe de levage (30, 32) destiné à lever et abaisser la plate-forme mobile (38), sachant qu'entre la plate-forme mobile (38) et une base (10) est agencée une articulation (26, 28), qui est montée pivotante aux deux extrémités et est formée de deux bielles (26, 28) reliées de manière pivotante et qui, sous l'effet du déploiement de l'organe de levage (30, 32), est tirée dans la position étirée,
l'organe de levage (30, 32) étant monté pivotant avec une extrémité et coaxialement à l'articulation (26, 28) sur la base (10),
l'autre extrémité de l'organe de levage étant montée pivotante dans un axe (46) sur la bielle (28) du côté plate-forme, lequel est disposé de manière excentrée par rapport à l'axe (36) de l'articulation du côté plate-forme, **caractérisé en ce que**
l'articulation (26, 28) dans la position étirée des bielles (26, 28) comporte un dispositif de butée,
et **en ce que** l'axe (46) excentré est disposé de telle sorte que, dans la position de fin de course supérieure, il précontraint les bielles (26, 28) de l'articulation (26, 28) contre le dispositif de butée.

2. Dispositif de levage selon la revendication 1, **caractérisé en ce que** l'organe de levage est un vérin (30, 32) pneumatique ou hydraulique.

3. Dispositif de levage selon la revendication 1, **caractérisé en ce que** l'organe de levage est un système d'entraînement à broche.

4. Dispositif de levage selon la revendication 2, **caractérisé en ce que** le vérin (30) est monté sur la base (10) dans l'axe (24) et **en ce que** la tige de piston (32) est montée, conjointement avec l'axe (46) excentré, sur la bielle supérieure (28) de l'articulation.

5. Dispositif de levage selon la revendication 1, **caractérisé en ce que** l'axe (46) excentré sur la bielle supérieure (28), dans lequel l'organe de levage (30, 32) est monté sur la bielle supérieure (28), est décalé latéralement par rapport à la ligne de liaison des deux axes de la bielle (28), de telle sorte que la force de l'organe de levage (30, 32) précontraint la bielle supérieure dans la direction de la position étirée de l'articulation.
